(19) Europäisches Patentamt
European Patent Office
Office européen des brevets

(11) **EP 4 803 195 A1**

(12) **EUROPEAN PATENT APPLICATION**
published in accordance with Art. 153(4) EPC

(43) Date of publication:
**09.09.2026 Bulletin 2026/37**

(21) Application number: **24886104.9**

(22) Date of filing: **21.10.2024**

(51) International Patent Classification (IPC):
***B01J 37/03*** *(2006.01)* ***B01J 37/08*** *(2006.01)*
***B01J 23/881*** *(2006.01)* ***B01J 35/40*** *(2024.01)*
***C01B 32/162*** *(2017.01)*

(52) Cooperative Patent Classification (CPC):
**B01J 23/881; B01J 35/40; B01J 37/03; B01J 37/08; C01B 32/162**

(86) International application number:
**PCT/KR2024/015989**

(87) International publication number:
**WO 2025/095429 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 KR 20230148157**

(71) Applicant: **LG Chem, Ltd.**
**Seoul 07336 (KR)**

(72) Inventors:
- **GIM, Min Yeong**
  **Daejeon 34122 (KR)**
- **OH, Eu Gene**
  **Daejeon 34122 (KR)**
- **CHOI, Jung Ho**
  **Daejeon 34122 (KR)**
- **KIM, Se Hyun**
  **Daejeon 34122 (KR)**
- **JEON, Hee Jung**
  **Daejeon 34122 (KR)**
- **KIM, Og Sin**
  **Daejeon 34122 (KR)**
- **HWANG, Doo Sung**
  **Daejeon 34122 (KR)**
- **KIM, Dong Eun**
  **Daejeon 34122 (KR)**

(74) Representative: **Vossius & Partner**
**Patentanwälte Rechtsanwälte mbB**
**Siebertstraße 3**
**81675 München (DE)**

(54) **METHOD FOR MANUFACTURING CATALYST FOR CARBON NANOTUBE PRODUCTION, CATALYST FOR CARBON NANOTUBE PRODUCTION, AND CARBON NANOTUBE**

(57) The present invention relates to a method for preparing a catalyst for producing carbon nanotubes, the method capable of easily preparing a catalyst, which may be used for producing thin-walled carbon nanotubes, by precipitating an active metal into a hydroxide form even under a relatively mild condition by using ammonium hydroxide as a co-precipitation agent, a catalyst for producing carbon nanotubes prepared by the preparation method, a method for producing carbon nanotubes by using the catalyst, and carbon nanotubes produced by the production method.

[FIG. 1]
G
2D
D
RBM
(Radial breathing mode)
3400 3200 3000 2800 2600 2400 2200 2000 1800 1600 1400 1200 1000 800 600 400 200
wavenumbers(cm-1)

EP 4 803 195 A1

Processed by Luminess, 75001 PARIS (FR)

Description

## TECHNICAL FIELD

### Cross-reference to Related Applications

This application claims the benefit of Korean Patent Application No. 10-2023-0148157, filed on October 31, 2023, in the Korean Intellectual Property Office, the disclosure of which is incorporated herein in its entirety by reference.

### Technical Field

The present invention relates to a method for preparing a catalyst for producing carbon nanotubes, the method capable of producing thin-walled carbon nanotubes having a high crystallinity and high electrical conductivity at a high yield, a catalyst for producing carbon nanotubes prepared by the preparation method, a method for producing carbon nanotubes by using the catalyst, and carbon nanotubes produced from the catalyst.

## BACKGROUND ART

Carbon nano materials may be divided into fullerene, carbon nanotubes (CNT), graphene, graphite nano plates, and the like according to the shape of a material, and among these, carbon nanotubes are macromolecules in which the surface of a hexagonal honeycomb-shaped graphite in which one carbon atom is bonded to three other carbon atoms is roundly rolled to a nano-sized diameter.

Carbon nanotubes are hollow, and thus, are lightweight, and have electrical conductivity as good as copper, thermal conductivity as excellent as diamond, and tensile strength as good as steel. According to the rolled-shape thereof, carbon nanotubes may be divided into single-walled carbon nanotubes (SWCNT), multi-walled carbon nanotubes (MWCNT), and rope carbon nanotubes.

Among the types of carbon nanotubes, single-walled carbon nanotubes in particular have an advantage of excellent conductivity, and have recently been in the spotlight as a material to replace carbon black in the field of conductive materials. However, unlike multi-walled carbon nanotubes, there is a limitation in that it is not easy to mass produce single-walled carbon nanotubes. Therefore, various studies are underway to produce multi-layered carbon nanotubes having similar physical properties to single-walled carbon nanotubes among multi-layered carbon nanotubes, and studies on synthesizing thin-walled carbon nanotubes, which are known to exhibit similar performance to single-walled carbon nanotubes, are also actively conducted.

In general, multi-walled carbon nanotubes are produced using a supported catalyst prepared by supporting metal active species on a support. The supported catalyst has an advantage in that it is easy to prepare the catalyst, but due to a limitation in increasing dispersion of the metal active species exposed on the surface of the support, has a disadvantage in synthesizing thin-walled carbon nanotubes having a small number of walls. Meanwhile, if a catalyst is prepared through a co-precipitation method, it is possible to uniformly distribute metal active species in the catalyst compared to a supported catalyst, which is advantageous in producing thin-walled carbon nanotubes.

When a catalyst is prepared using a co-precipitation method, properties and a shape of the catalyst vary depending on the type of a co-precipitation agent used, the pH, temperature or pressure conditions during a preparation process, and the like. A co-precipitation catalyst used for producing carbon nanotubes known in the art is prepared by a hydrothermal synthesis method in which a component such as urea is used as a co-precipitation agent, and a reaction is performed under high-temperature and pressure conditions. In the above-described method, carbonate ions and metal cations generated by pyrolysis of the urea during the reaction process are combined, so that precipitation occurs in the form of a metal carbonate. However, if precipitation occurs in the form of a metal carbonate as described above, the precipitation occurs even under a pH condition not desired, so that it is difficult to control the particle size or shape of an active metal as desired, and since the hydrothermal synthesis method requires high-temperature and pressure conditions, there is also a disadvantage in that the production cost of a catalyst increases.

Therefore, there is a need for additional studies on a new method for preparing a catalyst, the method capable of preparing a catalyst for producing thin-walled carbon nanotubes under a more mild condition.

Prior Art Document

(Patent Document 1) KR 10-2016-0107524 A (Published on September 19, 2016)

## DISCLOSURE OF THE INVENTION

## TECHNICAL PROBLEM

The present invention is to provide a method for preparing a catalyst, wherein the method uses a co-precipitation method, but prepares a catalyst by allowing an active metal to precipitate in the form of a metal hydroxide, and thus, is capable of preparing thin-walled carbon nanotubes having a high crystallinity at a high yield, a catalyst prepared from the preparation method of a catalyst, a method for producing carbon nanotubes by using the catalyst, and carbon nanotubes produced from the production method.

## TECHNICAL SOLUTION

In order to achieve the above-described objects, the present invention provides a method for preparing a catalyst for producing carbon nanotubes, the catalyst for producing carbon nanotubes, a method for producing carbon nanotubes, and the carbon nanotubes.

Specifically, (1) the present invention provides a method for preparing a catalyst for producing carbon nanotubes, the method including S1 dissolving an iron precursor, a molybdenum precursor, and a magnesium precursor in water, thereby preparing a precursor aqueous solution, S2 introducing ammonium hydroxide ($NH_4OH$) into the precursor aqueous solution and co-precipitating the mixture, thereby preparing a slurry, S3 recovering solids from the slurry, and S4 drying and firing the solids.

(2) In (1) above, the present invention provides a method for preparing a catalyst for producing carbon nanotubes, wherein the molar ratio between the iron, the molybdenum, and the magnesium is between 0.5 to 8:0.05 to 10:88.

(3) In (1) or (2) above, the present invention provides a method for preparing a catalyst for producing carbon nanotubes, wherein the molar ratio between the iron and the molybdenum is 20:1 to 5:1.

(4) In any one among (1) to (3) above, the present invention provides a method for preparing a catalyst for producing carbon nanotubes, wherein Step S2 above is performed under normal pressure and room temperature conditions.

(5) In any one among (1) to (4) above, the present invention provides a method for preparing a catalyst for producing carbon nanotubes, wherein the ammonium hydroxide is introduced at a molar ratio of 0.1 to 5.0 with respect to a combined content of iron, molybdenum, and magnesium in the precursor aqueous solution.

(6) In any one among (1) to (5) above, the present invention provides a method for preparing a catalyst for producing carbon nanotubes, wherein Step S3 above includes S3-1 aging the slurry, and S3-2 recovering and washing solids from the aged slurry.

(7) In any one among (1) to (6) above, the present invention provides a method for preparing a catalyst for producing carbon nanotubes, wherein Step S3-1 above is performed at 25 °C to 120 °C for 6 hours to 48 hours.

(8) In any one among (1) to (7) above, the present invention provides a method for preparing a catalyst for producing carbon nanotubes, wherein the iron precursor is one or more selected from the group consisting of iron nitrate, iron chloride, iron acetate, iron sulfate, and hydrates thereof, the molybdenum precursor is one or more selected from the group consisting of ammonium molybdate, sodium molybdate, phosphomolybdic acid, and hydrates thereof, and the magnesium precursor is one or more selected from the group consisting of magnesium nitrate, magnesium chloride, magnesium acetate, and hydrates thereof.

(9) In any one among (1) to (8) above, the present invention provides a method for preparing a catalyst for producing carbon nanotubes, wherein the drying is performed at 50 °C to 150 °C, and the firing is performed at 300 °C to 900 °C.

(10) The present invention provides a catalyst for producing carbon nanotubes, the catalyst including iron, molybdenum, and magnesium, wherein when the molar ratio between the iron, the molybdenum, and the magnesium is a:b:c, a is 0.5 to 8, b is 0.05 to 10, and c is 88, and a ratio (D/a) of a maximum size D (nm) of active metal particles, which is obtained by TEM analysis of the catalyst, to a value of the a above is 4 or less.

(11) In (10) above, the present invention provides a catalyst for producing carbon nanotubes, wherein when a minimum size of the active metal particles, which is obtained by TEM analysis of the catalyst, is d (nm), a d/a is 3 or less.

(12) In (10) or (11) above, the present invention provides a catalyst for producing carbon nanotubes, wherein the difference between the D and the d above is 2 or less.

(13) The present invention provides a method for producing carbon nanotubes, the method including introducing the catalyst of claim 10 into a reactor, and heating the same while injecting a carbon source gas into the reactor, thereby producing carbon nanotubes.

(14) The present invention provides carbon nanotubes in which a graph of the rate of change in mass per unit temperature, which is obtained by TGA-DTG analysis, has a maximum value at 500 °C to 700 °C.

(15) In (14) above, the present invention provides carbon nanotubes, wherein the carbon nanotubes have a crystallinity $I_G/I_D$ of 10 or greater as obtained by a Raman spectrum.

## ADVANTAGEOUS EFFECTS

According to a method for preparing a catalyst for producing carbon nanotubes of the present invention, an active metal may be precipitated in a hydroxide form even under a relatively mild condition by using ammonium hydroxide as a co-precipitation agent, so that a catalyst which may be used for producing thin-walled carbon nanotubes may be more easily prepared.

In addition, a catalyst for producing carbon nanotubes according to the present invention has metal active species uniformly distributed inside the catalyst particles, so that thin-walled carbon nanotubes having a high crystallinity may be prepared at a high yield.

In addition, carbon nanotubes of the present invention are produced from the catalyst, and thus, have a high crystallinity and excellent thermal stability.

## BRIEF DESCRIPTION OF THE DRAWINGS

FIG. 1 is a view showing a Raman spectrum of carbon nanotubes produced from a catalyst of Example 1 of the present invention.

FIG. 2 is a SEM image (x1,000K) observed after purifying the carbon nanotubes produced from the catalyst of Example 1 of the present invention.

FIG. 3 is a SEM image (x5,000K) observed after purifying the carbon nanotubes produced from the catalyst of Example 1 of the present invention.

FIG. 4 is a graph showing TGA-DTG analysis results of carbon nanotubes respectively prepared from catalysts of Examples 1, 6, 8, and 9 of the present invention.

## MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The term 'carbon nanotube' used in the present invention refers to a secondary structure in which units of a carbon nanotube are assembled in whole or in part, and the units of carbon nanotube have a graphite sheet in a cylindrical shape having a nano-sized diameter, and have a sp2 bonding structure. At this time, depending on the angle and structure in which the graphite sheet is rolled, conductor properties or semiconductor properties may be exhibited. Depending on the number of bonds forming a wall, the units of a carbon nanotube may be classified into a single-walled carbon nanotube (SWCNT), a double-walled carbon nanotube (DWCNT), and a multi-walled carbon nanotube (MWCNT), and the thinner the wall, the lower the resistance.

Particularly, carbon nanotubes of the present invention may be thin-walled carbon nanotubes having a wall thickness of approximately 1 nm to 5 nm, and a wall number of 1 to 3.

### Preparation method of catalyst for producing carbon nanotubes

Many types of catalysts used in the mass production of carbon nanotubes are prepared using a supporting method. The supporting method prepares a catalyst by immersing a support in a solution in which active metal components are dissolved, followed by drying and firing the support. However, during the above-described process, it is not easy for active metals to penetrate into the inner space of the support, so that most of the active metal components of a supported catalyst are distributed in a surface region of particles of the catalyst, which means that it is not easy to grow carbon nanotubes having a small number of walls from the catalyst.

A co-precipitation method is known to be a catalyst preparation method capable of solving the above-described disadvantage of the supporting method. The co-precipitation method prepares a catalyst by adding a co-precipitation agent to a solution in which both an active metal and a support metal are dissolved, thereby allowing the active metal and the support metal to precipitate together. A catalyst prepared using the co-precipitation method has an advantage in that an active metal is uniformly distributed to the inner space of the catalyst compared to a catalyst prepared using the supporting method. Among such co-precipitation methods, a representative method known to be used for a catalyst for producing carbon nanotubes is a hydrothermal synthesis method. The hydrothermal synthesis method is performed under high pressure and temperature conditions, and a method for preparing a catalyst for producing carbon nanotubes by using the

hydrothermal synthesis method is disclosed in the prior art document 1. However, the method for preparing a catalyst for producing carbon nanotubes by using the hydrothermal synthesis method also has a disadvantage. The fact that a high pressure and a high temperature are required means that the cost of energy used in a preparation process of a catalyst increases, and the hydrothermal synthesis method is difficult to scale-up, so that it is not easy to mass produce a catalyst having the same physical properties as a catalyst confirmed on a lab scale. In addition, in the hydrothermal synthesis method, properties of a catalyst easily changes depending on pressure and temperature conditions, so that it is not easy to secure reproducibility of the catalyst.

In this regard, the present invention provides a method for preparing a catalyst, wherein the method uses a co-precipitation method under mild conditions of room temperature and normal pressure, but precipitates an active metal in the form of a hydroxide rather than a carbonate by using ammonium hydroxide as a co-precipitation agent, so that the cost of preparing the catalyst may be relatively low, and thin-walled carbon nanotubes having a high crystallinity may be produced.

More specifically, the present invention provides a method for preparing a catalyst for producing carbon nanotubes, the method including S1 dissolving an iron precursor, a molybdenum precursor, and a magnesium precursor in water, thereby preparing a precursor aqueous solution, S2 introducing ammonium hydroxide ($NH_4OH$) into the precursor aqueous solution and co-precipitating the mixture, thereby preparing a slurry, S3 recovering solids from the slurry, and S4 drying and firing the solids.

Hereinafter, each step included in the method for preparing a catalyst for producing carbon nanotubes, the method provided by the present invention, will be described in detail.

Preparation step S1 of precursor aqueous solution

In Step S1 above, precursors of iron and molybdenum, which are active metals of a catalyst, and a precursor of magnesium, which is a support, are dissolved in water to prepare an aqueous precursor solution.

The molar ratio between iron, molybdenum, and magnesium, which are metal components respectively derived from the iron precursor, the molybdenum precursor, and the magnesium precursor dissolved in the present step, may be 0.5 to 8 : 0.05 to 10 : 88, preferably 0.5 to 8 : 0.05 to 1 : 88. If the iron and the molybdenum are included in the above-described molar ratio with respect to the magnesium, it is possible to ensure sufficient durability of a prepared catalyst and provide sufficient catalytic activity.

Furthermore, the molar ratio between the iron and the molybdenum may be 20:1 to 5:1, preferably 15:1 to 7:1. The molybdenum is a type of a co-catalyst component which further enhances the catalytic activity of iron, and if the molar ratio between the iron and the molybdenum satisfies the above-described condition, a synergistic effect between the two components is maximized, so that the catalytic activity may be particularly high.

The iron precursor, the molybdenum precursor, and the magnesium precursor may be preferable if they can be sufficiently dissolved in water under conditions of room temperature and normal pressure. More specifically, the iron precursor may be one or more selected from the group consisting of iron nitrate, iron chloride, iron acetate, iron sulfate, and hydrates thereof. The molybdenum precursor may be one or more selected from the group consisting of ammonium molybdate, sodium molybdate, phosphomolybdic acid, and hydrates thereof. The magnesium precursor may be one or more selected from the group consisting of magnesium nitrate, magnesium chloride, magnesium acetate, and hydrates thereof.

Co-precipitation step S2

A co-precipitation agent may be added to the precursor aqueous solution prepared through the previous step to precipitate the dissolved metal components together.

In the synthesis of a catalyst by a co-precipitation method, the type of a co-precipitation agent introduced determines the form in which the metal components will be precipitated. In general, if a compound including carbonate ions is introduced as a co-precipitation agent, metal components are precipitated in the form of a metal carbonate, but if precipitation occurs in the form of a metal carbonate, the precipitation occurs even under a pH condition not desired, so that there is a disadvantage in that it is difficult to control the particle size or shape of an active metal as desired. In addition, even if ammonium bicarbonate or the like, which is known as a co-precipitation agent, is used, the crystallinity of carbon nanotubes produced from an obtained catalyst may be reduced, or the production yield of the carbon nanotubes may be degraded.

On the other hand, in the present invention, ammonium hydroxide is used as a co-precipitation agent to precipitate metal components in the form of a metal hydroxide, and the metal hydroxide may cause precipitation in a relatively desired pH condition, and accordingly, the size of active metal particles may also be controlled to be in an appropriate range. In addition, Step S2 above may be performed under normal pressure and room temperature conditions, through which it is possible to overcome the above-described disadvantages of the hydrothermal synthesis method.

In addition, the ammonium hydroxide introduced as a co-precipitation agent in the present step may be introduced at a molar ratio of 0.1 to 5.0 with respect to the total content of the iron, the molybdenum, and the magnesium in the precursor aqueous solution, and preferably, may be introduced at a molar ratio of 0.5 to 3. Only when the co-precipitation agent is introduced in an appropriate amount, the amount of a catalyst obtained may increase without any lost metal components.

Solids recovery step S3

Solids may be recovered from the slurry prepared through the previous step and used as a catalyst.
In the present step, a method commonly used to recover solids from a slurry may be applied, and for example, a decompression filter, a centrifuge, or the like may be used to recover solids.
Meanwhile, Step S3 above may include aging the slurry S3-1, and recovering and washing solids from the aged slurry S3-2.
Through the above-described step of aging the slurry, it is possible to uniformly distribute iron, which is an active metal in a catalyst, during the aging process, and there is a technical advantage in that it is possible to convert even components, which have not yet been converted into a hydroxide form, into to the hydroxide form. The above-described aging process may be performed at 25 °C to 120 °C for 6 hours to 48 hours.
In addition, impurities remaining in the solids may be removed through the washing process in S3-2 above. If the washing process is not performed, the remaining impurities may adversely affect a carbon nanotube synthesis reaction.

Drying and firing step S4

The solids produced through the previous step may be finally dried and fired to obtain a catalyst. Moisture remaining in the solids may be removed during the drying process, and the metal hydroxide may be converted into a stable metal oxide through the firing process.
In the present step, the drying may be performed at 50 °C to 150 °C, preferably 80 °C to 105 °C, and the firing may be performed at 300 °C to 900 °C, preferably 400 °C to 800 °C. If the temperature at which the drying and the firing are performed is too low, sufficient drying and firing efficiency may not be exhibited, and if higher than the above-described ranges, the cost of the preparation process may increase, and at the same time, a prepared catalyst may be pyrolyzed, or the like.

**Catalyst for producing carbon nanotubes**

In addition to the above-described method for preparing a catalyst for producing carbon nanotubes, the present invention provides a catalyst for producing carbon nanotubes prepared by the above-described preparation method.
More specifically, the present invention provides a catalyst for producing carbon nanotubes, the catalyst including iron, molybdenum, and magnesium, wherein when the molar ratio between the iron, the molybdenum, and the magnesium is a:b:c, a is 0.5 to 8, b is 0.05 to 10, and c is 88, and a ratio (D/a) of a maximum size D (nm) of active metal particles, which is obtained by TEM analysis of the catalyst, to a value of the a above is 4 or less. Meanwhile, the active metal refers to iron.
The catalyst for producing carbon nanotubes of the present invention is prepared using ammonium hydroxide as a co-precipitation agent, and thus, is characterized in that the size of active metal particles is smaller. There is a technical advantage in that the smaller the size of the active metal particles, the more advantageous it is for the synthesis of thin-walled carbon nanotubes with a small diameter. However, the size of the active metal particles is affected by the composition of the catalyst, more specifically, the composition of iron, which is the active metal in the catalyst, and the catalyst prepared in the present invention is characterized in that a D/a value, which is the ratio of a maximum size D (nm) of the active metal particles to a composition ratio a of the iron, is 4 or less, preferably 2 to 3.5. Meanwhile, the D refers to the number of the maximum size of the active metal particles which is expressed in nm.
In addition, in the catalyst for producing carbon nanotubes of the present invention, when a minimum size of the active metal particles, which is obtained by TEM analysis of the catalyst, is d (nm), a d/a may be 3 or less, preferably 1 to 2.5. In addition, the difference between the D and the d above may be 2 or less, preferably 1.5 or less.
Meanwhile, the D and the d above may be directly measured by TEM analysis of the catalyst.

**Method for producing carbon nanotubes**

The present invention provides a method for producing carbon nanotubes by using the above-described catalyst for producing carbon nanotubes.
More specifically, the present invention provides a method for producing carbon nanotubes, the method including

introducing the above-described catalyst into a reactor, and heating the same while injecting a carbon source gas into the reactor, thereby producing carbon nanotubes.

As the reactor above, a chemical vapor deposition reactor or a fluidized bed reactor may be used.

In addition, the carbon source gas is a carbon-containing gas which may be decomposed at a high temperature to form carbon nanotubes, and specific examples thereof may include various carbon-containing compounds such as aliphatic alkanes, aliphatic alkenes, aliphatic alkynes, aromatic compounds, and the like, and more specifically, a compound of methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, acetaldehyde, and the like may be used.

In order to increase the fluidity of the catalyst, a flowing gas may be introduced together with the carbon source gas. The flowing gas may be an inert gas with no reactivity or a nitrogen gas, and more specifically, may be an argon or nitrogen gas.

When the carbon source gas and the flowing gas are introduced together, the flow rate ratio of the carbon source gas and the flowing gas may be 1:2 to 1:8 based on volume, preferably 1:3 to 1:7.

In addition, the carbon nanotube synthesis reaction may be performed at a temperature of 750 °C to 900 °C.

## Carbon nanotubes

The present invention provides carbon nanotubes produced from the above-described catalyst.

More specifically, the carbon nanotubes provided by the present invention may be carbon nanotubes characterized in that a graph of the rate of change in mass per unit temperature, which is obtained by TGA-DTG analysis, has a maximum value at 500 °C to 700 °C.

In addition, the carbon nanotubes may have a crystallinity $I_G/I_D$ of 10 or greater, preferably 10 to 20, as obtained by a Raman spectrum.

In addition, the carbon nanotubes may have a diameter of 0.8 nm to 2 nm as obtained by Raman analysis.

In addition, the carbon nanotubes may have a BET specific surface area of 900 $m^2/g$ or greater. Preferably, the carbon nanotube may have a BET specific surface area of 900 $m^2/g$ or greater and 1300 $m^2/g$ or less.

In addition, the number of walls of the carbon nanotubes may be 1 to 3.

The carbon nanotubes produced from the catalyst of the present invention have excellent thermal stability and a high crystallinity, and thus, have excellent electrical conductivity.

Meanwhile, the TGA PGA-DTG analysis may be performed using TGA2 equipment (manufacturer: Mettler Toledo).

In addition, the $I_G/I_D$ ratio may be measured with respect to the obtained carbon nanotubes, and more specifically, may be calculated by measuring the intensity ratio of a G peak (1550 $cm^{-1}$ to 1650 $cm^{-1}$) and a D peak (1250 $cm^{-1}$ to 1400 $cm^{-1}$) of a Raman spectrum obtained at a laser wavelength of 532 nm by using a DXR Raman microscope (manufacturer: Thermo Electron Scientific Instruments LLC).

In addition, the BET specific surface area may specifically be calculated by obtaining a nitrogen gas adsorption amount at a liquid nitrogen temperature (77 K) using BELSORP-mini II of BEL Japan Co., Ltd.

In addition, the number of walls of the carbon nanotubes may be confirmed through the TEM analysis, and may also be indirectly confirmed through a radial breathing mode (RBM) appearing in a region of 400 $cm^{-1}$ or less of the Raman spectrum.

Hereinafter, the present invention will be described in more detail with reference to examples and experimental examples, but the present invention is not limited by these examples and experimental examples. The examples according to the present invention may be modified into other various forms, and the scope of the present invention should not be construed as being limited to the examples to be described below. The examples of the present invention are provided to more fully describe the present invention to those skilled in the art.

## Examples and Comparative Examples

Iron nitrate nonahydrate was used as an iron precursor, ammonium molybdate was used as a molybdenum precursor, and magnesium nitrate hexahydrate was used as a magnesium precursor. The iron precursor, the molybdenum precursor and the magnesium precursor were all dissolved in distilled water to prepare a precursor aqueous solution.

Thereafter, a co-precipitation agent was introduced into the precursor aqueous solution prepared under room temperature and normal pressure conditions to prepare a slurry solution. The prepared slurry solution was aged at a temperature of 40 °C to 120 °C for 6 hours to 48 hours, and solids were recovered using a decompression filter, and then washed using distilled water.

The washed solids were dried at 50 °C to 200 °C for 6 hours to 24 hours, and fired at 300 °C to 900 °C for 2 hours to 6 hours to finally obtain a catalyst for producing carbon nanotubes.

The composition (based on moles) of iron, molybdenum, and magnesium used in each of Examples and Comparative Examples, the type of a co-precipitation agent, and the amount of the co-precipitation agent used are summarized and described in Table 1 below.

[Table 1]

| | Catalyst composition (based on molar ratio) | | | Type of co-precipitation agent | Molar ratio of co-precipitation agent/metal |
|---|---|---|---|---|---|
| | Fe | Mo | Mg | | |
| Example 1 | 1 | 0.1 | 88 | $NH_4OH$ | 1.8 |
| Example 2 | 0.5 | 0.05 | 88 | $NH_4OH$ | 1.8 |
| Example 3 | 2 | 0.2 | 88 | $NH_4OH$ | 1.8 |
| Example 4 | 4 | 0.4 | 88 | $NH_4OH$ | 1.8 |
| Example 5 | 8 | 0.8 | 88 | $NH_4OH$ | 1.8 |
| Example 6 | 1 | 0.05 | 88 | $NH_4OH$ | 1.8 |
| Example 7 | 1 | 0.3 | 88 | $NH_4OH$ | 1.8 |
| Example 8 | 1 | 0.5 | 88 | $NH_4OH$ | 1.8 |
| Example 9 | 1 | 1 | 88 | $NH_4OH$ | 1.8 |
| Comparative Example 1 | 1 | 0.1 | 88 | NaOH | 1.8 |
| Comparative Example 2 | 1 | 0.1 | 88 | $Na_2CO_3$ | 1.8 |
| Comparative Example 3 | 1 | 0.1 | 88 | $(NH_4)_2CO_3$ | 1.8 |
| Comparative Example 4 | 8 | 0.8 | 88 | $(NH_4)_2CO_3$ | 1.8 |
| Comparative Example 5 | 1 | 0.1 | 88 | $NH_4HCO_3$ | 1.8 |
| Comparative Example 6 | 8 | 0.8 | 88 | $NH_4HCO_3$ | 1.8 |
| * The metal molar ratio refers to a combined molar ratio of iron, molybdenum, and magnesium. | | | | | |

**Experimental Example 1. Confirmation of production yield and crystallinity of carbon nanotubes**

0.5 g of the catalyst prepared in each of Examples and Comparative Examples was filled in a chemical vapor deposition reactor, and then reacted in an argon/methane gas atmosphere at 850 °C for 15 minutes to 60 minutes to obtain carbon nanotubes. The flow rate of the argon and methane gases were respectively 540 sccm and 105 sccm.

The yield and crystallinity of the obtained carbon nanotubes were measured in the following manner and summarized in Table 2.

1) Yield (yield of carbon nanotubes per unit metal mass) :

Yield = (mass of obtained carbon nanotubes / mass of active metal (iron)) * 100%

2) Crystallinity $I_G/I_D$: Measured with respect to the obtained carbon nanotubes, and calculated by measuring the intensity ratio of a G peak (1550 $cm^{-1}$ to 1650 $cm^{-1}$) and a D peak (1250 $cm^{-1}$ to 1400 $cm^{-1}$) of a Raman spectrum obtained at a laser wavelength of 532 nm by using a DXR Raman microscope (manufacturer: Thermo Electron Scientific Instruments LLC).

[Table 2]

| | Yield (%) | Crystallinity |
|---|---|---|
| Example 1 | 1580 | 16.7 |
| Example 2 | 1130 | 15.4 |
| Example 3 | 884 | 15.5 |

(continued)

| | Yield (%) | Crystallinity |
|---|---|---|
| Example 4 | 531 | 12.3 |
| Example 5 | 348 | 10.4 |
| Example 6 | 596 | 12.8 |
| Example 7 | 2230 | 15.3 |
| Example 8 | 2418 | 12.1 |
| Example 9 | 2302 | 11.0 |
| Comparative Example 1 | 116 | 3.7 |
| Comparative Example 2 | 890 | 4.5 |
| Comparative Example 3 | 979 | 8.1 |
| Comparative Example 4 | 351 | 8.4 |
| Comparative Example 5 | 682 | 11.7 |
| Comparative Example 6 | 314 | 7.4 |

As summarized in Table 2 above, it has been confirmed that the catalyst of the present invention may synthesize carbon nanotubes at a high yield compared to Comparative Examples, and at the same time, has a high crystallinity of 10 or greater of the obtained carbon nanotubes.

On the other hand, the catalysts of Comparative Examples 1 to 6, in which a different type of co-precipitation agent from that of Examples of the present invention was used, showed results in which one or more of yield and crystallinity were poor, and in the case of Comparative Examples 2 and 3, in which a relatively high yield was obtained among Comparative Examples, it has been confirmed that both the yield and the crystallinity were inferior to those of Example 1 of the present invention, in which ammonium hydroxide was used as a co-precipitant agent in the same composition.

From the above, it has been confirmed that if the catalyst of the present invention is used, carbon nanotubes having a high crystallinity and excellent electrical conductivity may be produced at a high yield.

**Experimental Example 2. Measurement of active metal particle size of catalyst**

The size of active metal particle was measured for the catalyst of each of Example 1 and Comparative Example 3 previously prepared. Specifically, the obtained catalyst was observed by TEM, and the size of the active metal particles was directly measured. Titan G2 (manufacturer: FEI) was used as TEM equipment.

[Table 3]

| | Value of catalyst composition a | Minimum size of active metal particle (d, nm) | Maximum size of active metal particle (D, nm) |
|---|---|---|---|
| Example 1 | 1 | 2.1 | 3.0 |
| Comparative Example 3 | 1 | 3.7 | 4.9 |

As can be confirmed through Table 3 above, it can be seen that the catalyst of Example 1 of the present invention in which ammonium hydroxide was used as a co-precipitation has a smaller active metal particle size than the catalyst of Comparative Example 3. Due to the small active metal particle size of the catalyst, the catalyst of the present invention may produce high-yield and high-crystalline carbon nanotubes.

**Experimental Example 3. Confirmation of shape of produced carbon nanotubes**

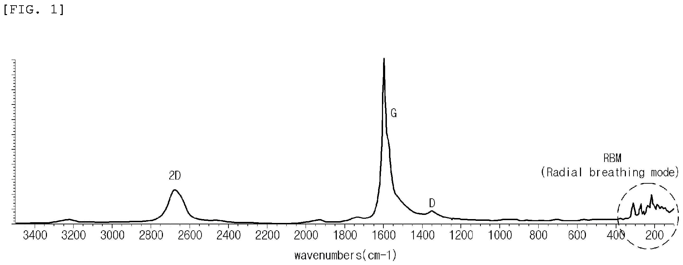

A Raman spectrum obtained for carbon nanotubes produced from the catalyst of Example 1 above is shown in FIG. 1. A RBM region was observed in the Raman spectrum of FIG. 1, which means that the carbon nanotubes produced from the catalyst of Example 1 are thin-walled carbon nanotubes.

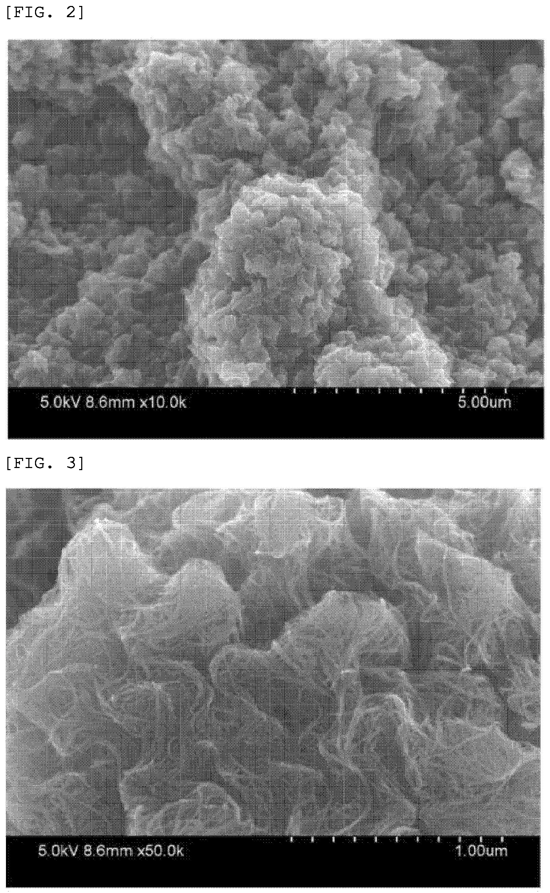

In addition, the carbon nanotubes produced from the catalyst of Example 1 were purified, and then the shape of

the carbon nanotubes was observed by SEM. Specifically, the produced carbon nanotubes were treated in the atmosphere at a temperature of 350 °C or higher for 30 minutes or more, and the catalyst included together was removed using an acid. The results are shown in FIGS. 2 and 3.

Through FIGS. 2 and 3, it can be seen that the shape of the carbon nanotubes prepared from the catalyst of the present invention has a form in which thin-walled carbon nanotube are aggregated.

## Experimental Example 4. TGA-DTG analysis of produced carbon nanotubes

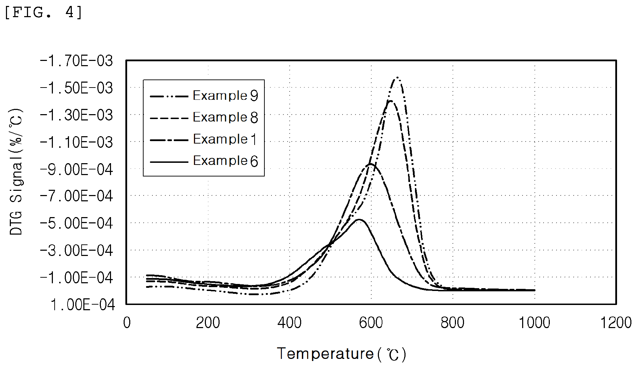

TGA-DTG analysis was performed on carbon nanotubes produced using the catalysts of Examples 1, 6, 8, and 9. TGA2 (manufacturer: Mettler Toledo) was used as analysis equipment. A resulting graph is shown in FIG. 4.

As can be confirmed through FIG. 4 above, the carbon nanotubes of the present invention show a maximum value of the TGA-DTG graph in the range of 500 °C to 700 °C, and this means that the carbon nanotubes of the present invention have excellent thermal stability.

## Claims

**1.** A method for preparing a catalyst for producing carbon nanotubes, the method comprising:

(S1) dissolving an iron precursor, a molybdenum precursor, and a magnesium precursor in water, thereby preparing a precursor aqueous solution;
(S2) introducing ammonium hydroxide ($NH_4OH$) into the precursor aqueous solution and co-precipitating the mixture, thereby preparing a slurry;
(S3) recovering solids from the slurry; and
(S4) drying and firing the solids.

**2.** The method of claim 1, wherein the molar ratio between the iron, the molybdenum, and the magnesium is between 0.5 to 8:0.05 to 10:88.

**3.** The method of claim 1, wherein the molar ratio between the iron and the molybdenum is 20:1 to 5:1.

**4.** The method of claim 1, wherein Step S2 above is performed under normal pressure and room temperature conditions.

**5.** The method of claim 1, wherein the ammonium hydroxide is introduced at a molar ratio of 0.1 to 5.0 with respect to a combined content of iron, molybdenum, and magnesium in the precursor aqueous solution.

**6.** The method of claim 1, wherein Step S3 above comprises:

(S3-1) aging the slurry; and
(S3-2) recovering and washing solids from the aged slurry.

**7.** The method of claim 6, wherein Step S3-1 above is performed at 25 °C to 120 °C for 6 hours to 48 hours.

**8.** The method of claim 1, wherein:

the iron precursor is one or more selected from the group consisting of iron nitrate, iron chloride, iron acetate, iron sulfate, and hydrates thereof;
the molybdenum precursor is one or more selected from the group consisting of ammonium molybdate, sodium molybdate, phosphomolybdic acid, and hydrates thereof; and
the magnesium precursor is one or more selected from the group consisting of magnesium nitrate, magnesium chloride, magnesium acetate, and hydrates thereof.

**9.** The method of claim 1, wherein:

the drying is performed at 50 °C to 150 °C; and
the firing is performed at 300 °C to 900 °C.

**10.** A catalyst for producing carbon nanotubes, the catalyst comprising iron, molybdenum, and magnesium,

wherein when the molar ratio between the iron, the molybdenum, and the magnesium is a:b:c,
a is 0.5 to 8, b is 0.05 to 10, and c is 88, and
a ratio (D/a) of a maximum size D (nm) of active metal particles, which is obtained by TEM analysis of the catalyst, to a value of the a above is 4 or less.

**11.** The catalyst of claim 10, wherein when a minimum size of the active metal particles, which is obtained by TEM analysis of the catalyst, is d (nm), a d/a is 3 or less.

**12.** The catalyst of claim 10, wherein the difference between the D and the d is 2 or less.

**13.** A method for producing carbon nanotubes, the method comprising introducing the catalyst of claim 10 into a reactor, and heating the same while injecting a carbon source gas into the reactor, thereby producing carbon nanotubes.

**14.** Carbon nanotubes in which a graph of the rate of change in mass per unit temperature, which is obtained by TGA-DTG analysis, has a maximum value at 500 °C to 700 °C.

**15.** The carbon nanotubes of claim 14, wherein the carbon nanotubes have a crystallinity $I_G/I_D$ of 10 or greater as obtained by a Raman spectrum.

[FIG. 1]

G
2D
D
RBM
(Radial breathing mode)
3400
3200
3000
2800
2600
2400
2200
2000
1800
1600
1400
1200
1000
800
600
400
200
wavenumbers(cm-1)

[FIG. 2]

5.0kV 8.6mm x10.0k
5.00um

[FIG. 3]

5.0kV 8.6mm x50.0k
1.00um

[FIG. 4]

-1.70E-03
-1.50E-03
-1.30E-03
-1.10E-03
-9.00E-04
-7.00E-04
-5.00E-04
-3.00E-04
-1.00E-04
1.00E-04
DTG Signal(%/℃)
0
200
400
600
800
1000
1200
Temperature(℃)
Example 9
Example 8
Example 1
Example 6

# INTERNATIONAL SEARCH REPORT

International application No.
**PCT/KR2024/015989**

**A. CLASSIFICATION OF SUBJECT MATTER**

**B01J 37/03**(2006.01)i; **B01J 37/08**(2006.01)i; **B01J 23/881**(2006.01)i; **B01J 35/40**(2024.01)i; **C01B 32/162**(2017.01)i

According to International Patent Classification (IPC) or to both national classification and IPC

**B. FIELDS SEARCHED**

Minimum documentation searched (classification system followed by classification symbols)

B01J 37/03(2006.01); B01J 21/00(2006.01); B01J 23/88(2006.01); B01J 23/889(2006.01); B01J 35/02(2006.01); B82Y 40/00(2011.01); D01F 9/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 전구체(precursor), 수산화 암모늄(ammonium hydroxide), 탄소나노튜브(carbon nanotube)

**C. DOCUMENTS CONSIDERED TO BE RELEVANT**

| Category* | Citation of document, with indication, where appropriate, of the relevant passages | Relevant to claim No. |
|---|---|---|
| X<br>A | KR 10-2011-0003937 A (KOREA KUMHO PETROCHEMICAL CO., LTD.) 13 January 2011 (2011-01-13)<br>See claims 1-4; and paragraphs [0001]-[0049]. | 1-13<br>14,15 |
| X | KR 10-2008-0002035 A (NANO KARBON) 04 January 2008 (2008-01-04)<br>See abstract; claim 1; paragraph [0011]; and figure 4. | 14,15 |
| A | KR 10-2016-0107524 A (LG CHEM, LTD.) 19 September 2016 (2016-09-19)<br>See claims 1-23. | 1-15 |
| A | CN 101384358 B (BAYER MATERIAL SCIENCE AG) 24 July 2013 (2013-07-24)<br>See claims 1-18. | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **20 January 2025** | **20 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | <br><br>Telephone No. |

Form PCT/ISA/210 (second sheet) (July 2022)

**INTERNATIONAL SEARCH REPORT**

International application No.
**PCT/KR2024/015989**

**C. DOCUMENTS CONSIDERED TO BE RELEVANT**

| Category* | Citation of document, with indication, where appropriate, of the relevant passages | Relevant to claim No. |
|---|---|---|
| A | US 2016-0160394 A1 (COVESTRO DEUTSCHLAND AG) 09 June 2016 (2016-06-09) See claims 20-38. | 1-15 |

Form PCT/ISA/210 (second sheet) (July 2022)

**INTERNATIONAL SEARCH REPORT**
**Information on patent family members**

International application No.
**PCT/KR2024/015989**

| Patent document cited in search report | Publication date (day/month/year) | Patent family member(s) | Publication date (day/month/year) |
|---|---|---|---|
| KR 10-2011-0003937 A | 13 January 2011 | KR 10-1089570 B1 | 05 December 2011 |
| | | US 2011-0006266 A1 | 13 January 2011 |
| | | US 8398894 B2 | 19 March 2013 |
| KR 10-2008-0002035 A | 04 January 2008 | KR 10-1262720 B1 | 10 May 2013 |
| KR 10-2016-0107524 A | 19 September 2016 | CN 106132537 A | 16 November 2016 |
| | | CN 106132537 B | 10 December 2019 |
| | | KR 10-1825265 B1 | 02 February 2018 |
| | | WO 2016-140443 A1 | 09 September 2016 |
| CN 101384358 B | 24 July 2013 | CN 101384358 A | 11 March 2009 |
| | | EP 1986775 A2 | 05 November 2008 |
| | | JP 2009-526726 A | 23 July 2009 |
| | | KR 10-2008-0094690 A | 23 October 2008 |
| | | US 2008-0003169 A1 | 03 January 2008 |
| | | US 8093176 B2 | 10 January 2012 |
| | | WO 2007-093337 A2 | 23 August 2007 |
| | | WO 2007-093337 A3 | 13 March 2008 |
| US 2016-0160394 A1 | 09 June 2016 | CN 105451777 A | 30 March 2016 |
| | | CN 105451883 A | 30 March 2016 |
| | | CN 105453052 A | 30 March 2016 |
| | | CN 105453052 B | 24 August 2018 |
| | | EP 2968606 A1 | 20 January 2016 |
| | | EP 2968606 B1 | 07 October 2020 |
| | | EP 3021966 A1 | 25 May 2016 |
| | | JP 2016-516725 A | 09 June 2016 |
| | | JP 2016-530083 A | 29 September 2016 |
| | | JP 6499155 B2 | 10 April 2019 |
| | | KR 10-2016-0034292 A | 29 March 2016 |
| | | WO 2015-007670 A1 | 22 January 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230148157
- KR 1020160107524 A